# EUROPEAN PATENT APPLICATION

(11) **EP 1 841 202 A2**
(43) Date of publication of application: **03.10.2007**
(21) Application number: 07251327.8
(22) Date of filing: 28.03.2007
(51) Int. Cl.: H04N 3/15

(54) **Solid state imaging apparatus**

(30) Priority: 30.03.2006 JP 2006093284
(71) Applicant: FUJIFILM Corporation, Minato-ku Tokyo (JP)
(72) Inventor: Yamada, Tetsuo, Kurokawa-gun, Miyagi (JP)
(74) Representative: Stevens, Jason Paul

(57) **Abstract**

A solid state imaging apparatus outputs an image of a frame composed of a first number of lines of pixels and a second number of columns of pixels. The signal electric charges are selectively read out from photoelectric conversion elements in the first number of lines. The signal electric charges other than those in the second number of columns are drained from the read out signal electrical charges. The solid state imaging apparatus may be equipped with an additional vertical transfer channel for storing continuous two frames of image simultaneously by cooperating with the vertical electric charge transfer device. Moreover, an additional horizontal transfer channel may be equipped for storing at least one line of the signal electric charges for the second number of columns by cooperating with the horizontal electric charge transfer device. A high quality motion picture can be output at a practical data rate.

## Description

This invention relates to a solid state imaging apparatus and more specifically to a structure of a solid state imaging apparatus.

Recently with application to a digital still camera (hereinafter called "DSC"), a solid state imaging apparatus has more and more pixels, and there is a solid state imaging apparatus having more than 5 millions pixels. Moreover, the number of pixels is continuously increasing.

Further, in a field of motion pictures, starting of digital broadcasting, a display device for high definition TV (HDTV) has been significantly popularized. The most common HDTV needs about 2 millions of pixel information in a 16:9 angle of view. On the other hand, it has been a selling point for a DSC that the DSC can take a VGA level motion picture. The VGA level motion picture can get sufficient quality of image for displaying a motion picture on a TV screen based on the conventional NTSC standard, etc. However, it is very difficult for a conventional DSC to take a motion picture having sufficient quality of image to be displayed by a high resolution HDTV display.

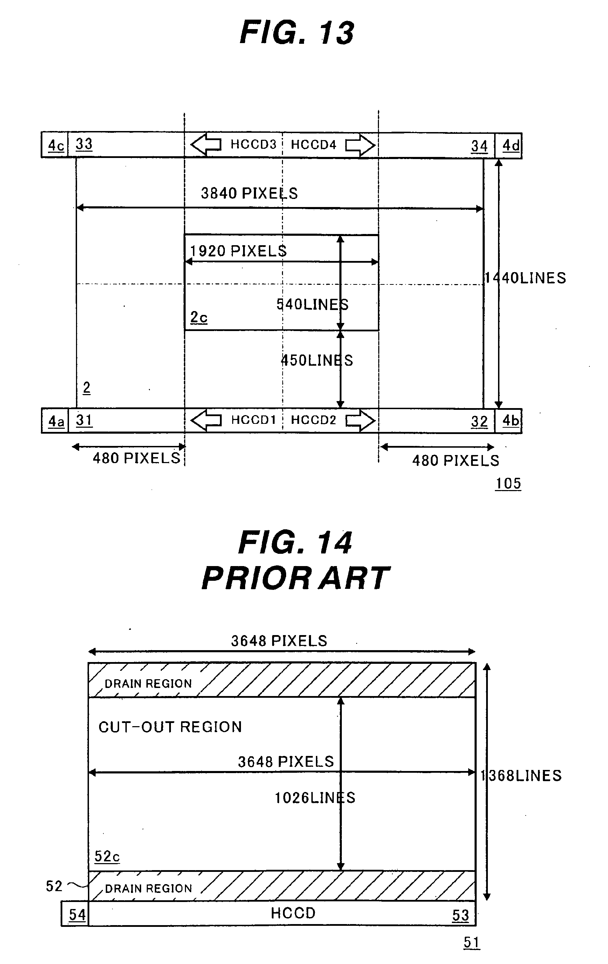

Fig. 14 is a schematic plan view showing a conventional solid state imaging apparatus 51 for a DSC for explaining an output method of an HDTV motion picture. In this example, the solid state imaging apparatus 51 has about 5 millions pixels consisting of 3648-pixel rows (columns) for 1368 lines. Moreover, in this example, an output method for a motion picture using a solid state imaging apparatus having so-called pixel interleaved array CCD (PIACCD).

In the solid state imaging apparatus having the PIACCD structure, one line consists of signals of 3648 pixels when the angle of view is 4:3, and the signals are transferred in vertical transfer CCDs (VCCDs). In this case, the number of the lines is 1368.

Image signals (cut out signal region) for a 16:9 HDTV can be obtained by cutting off upper and lower lines (cut off region) in a vertical direction from the signals for the 4:3 angle of view. In this case, the number of the pixels will be 3,750,000 which is the product of the 3648 pixels multiplied by the 1026 lines. If the cut off upper and the lower lines are drained at high speed, a data rate for outputting signals for that number of pixels at 30 frames a second (fps), which is necessary for a motion picture, will be 135 MHz (using 15-30%, preferably 20%, for a blanking period). This frequency makes a noise reduction process such as CDS, etc. extremely difficult, and is not realistic.

Therefore, by outputting signals after adding two horizontally adjacent pixels by using a horizontal addition method (refer to Japanese Laid-Open Patent No. 2002-112119) invented by the inventor of this invention, signals of 1824 pixels by 1026 lines can be obtained. The signals obtained by that can be roughly used for an HDTV motion picture because that is an approximation value of 1920 pixels by 1080 lines based on the HDTV standard.

However, even in this case, the signals must be output at a data rate of 73 MHz (the blanking period has been increased to 30% by the horizontal addition), and execution of a noise reduction process is also very difficult as in the above-described prior art. In order to avoid that, for example, the signals may be read out by two channels in parallel; however, parallel reading out is also difficult. In addition to that, the horizontally added signals will be signals consisting of signals space-sampled in different positions; therefore, a quality of the image will be significantly damaged if there is sufficient number of pixels comparing to the number of pixels based on the standard. Those problems, especially the problem of high data rate gets serious as the number of pixels gets higher. Further there is a problem of increase in power consumption for increasing the data rate.

Moreover, the details of the pixel interleaved arrangement and other conventional techniques can be found in Japanese Laid-Open Patent No. H10-256522 and Japanese Laid-Open Patent Hei10-136391 and Tetsuo Yamada, et al, February, 2000, "A Progressive Scan CCD Imager for DSC Applications", ISSCC Digest of Technical Papers, Page 110 to 111.

It is an object of at least the preferred embodiments of the present invention to provide a solid state imaging apparatus that can output a motion picture at a practical data rate without damage in a quality of image.

According to one aspect of the present invention, there is provided a solid state imaging apparatus that outputs an image of a frame composed of a first number of lines of pixels and a second number of columns of pixels, the apparatus comprising: a semiconductor substrate demarcating a two-dimensional surface; a multiplicity of photoelectric conversion elements arranged in a plurality of lines and columns in a light receiving region of the semiconductor substrate, each photoelectric conversion element composing the pixel and generating a signal electric charge in accordance with an incident light; a vertical electric charge transfer device that is arranged vertically between the columns of the photoelectric conversion elements and transfers the signal electric charge generated by the photoelectric conversion elements; a plurality of transfer gates each of which controls transfer of the signal electric charge to the vertical electric charge transfer device from the photoelectric conversion element; a power supplying device that has a first power supply line for impressing a transfer pulse to the transfer gates corresponding to the photoelectric conversion elements in the first number of lines of pixels and a second power supply line for impressing a transfer pulse to the transfer gates corresponding to the photoelectric conversion elements in other lines of pixels, wherein the first and the second power supply lines are electrically independent from each other and the power supplying device can control the transfer gates to read out the signal electrical charges only from the photoelectric conversion elements in the first number of lines of pixels; a drain that that drains the signal electric charges corresponding to the photoelectric conversion elements other than the signal electric charges corresponding to the photoelectric conversion elements in the second number of columns of pixels from the read out signal electrical charges of the photoelectric conversion elements in the first number of lines of pixels; a horizontal electric charge transfer device that horizontally transfers the signal electric charges transferred by the vertical electric charge transfer device; and an output circuit that outputs the signal electric charges transferred by the horizontal electric charge transfer device.

The solid state imaging apparatus may further comprises an additional vertical transfer channel having transfer steps by which continuous two of the frames of image can be stored simultaneously by cooperating with the vertical electric charge transfer device.

Moreover, the solid state imaging apparatus may further comprises an additional horizontal transfer channel having transfer steps, by which at least one line of the signal electric charges corresponding to the photoelectric conversion elements in the second number of columns of pixels can be stored by cooperating with the horizontal electric charge transfer device, between the horizontal electric charge transfer device and the output circuit.

According to the present invention, a solid state imaging apparatus that can output a motion picture at a practical data rate without damage in a quality of image can be provided.

Preferred embodiments of the invention will now be described by way of example only and with reference to the accompanying drawings, in which:
Fig. 1 is a schematic plan view showing a solid-state imaging apparatus 1 according to a first embodiment of the present invention;
Fig. 2 is an enlarged plan view showing a part of a light-receiving region 2 of the solid-state imaging apparatus 1 according to the first embodiment of the present invention;
Fig. 3 is an enlarged cross sectional view of the solid-state imaging apparatus according to the first embodiment of the present invention;
Fig. 4A and 4B are a plan view and a schematic diagram for explaining an image cutting out method in the solid state imaging apparatus 1 according to the first embodiment of the present invention;
Fig. 5 is a plan view for explaining an image cutting out method in the solid state imaging apparatus 102 according to a second embodiment of the present invention;
Fig. 6 is a schematic plan view showing a solid-state imaging apparatus 112 according to a first modified example of the second embodiment of the present invention;
Fig. 7 is a schematic plan view showing a solid-state imaging apparatus 122 according to a second modified example of the second embodiment of the present invention;
Fig. 8A and Fig. 8B are diagrams for explaining a VCCD drain 25 according to all the embodiments of the present invention;
Fig. 9 is a plan view for explaining an image cutting out method in the solid state imaging apparatus 103 according to a third embodiment of the present invention;
Fig. 10 is a block diagram for explaining a function of a blanking timing correction circuit 45 according to the third embodiment of the present invention;
Fig. 11 is a plan view for explaining an image cutting out method in the solid state imaging apparatus 104 according to a fourth embodiment of the present invention;
Fig. 12 is a schematic plan view showing a solid-state imaging apparatus 114 according to a modified example of the fifth embodiment of the present invention;
Fig. 13 is a plan view for explaining an image cutting out method in the solid state imaging apparatus 105 according to a fifth embodiment of the present invention; and
Fig. 14 is a schematic plan view showing a conventional solid state imaging apparatus 51 for a DSC for explaining an output method of an HDTV motion picture.

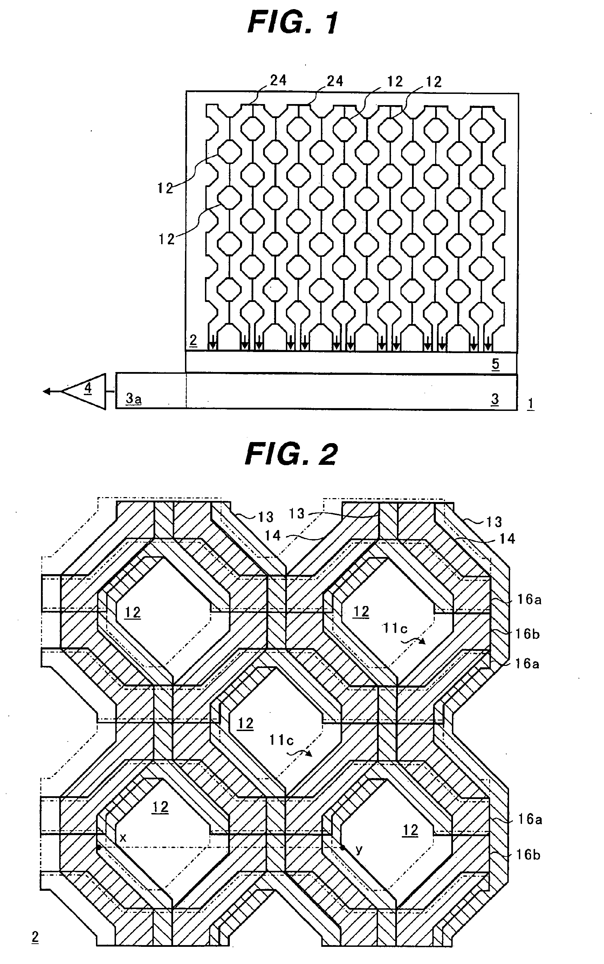

Fig. 1 is a schematic plan view showing a solid-state imaging apparatus 1 according to a first embodiment of the present invention.

The solid-state imaging apparatus 1 consists of a light-receiving region 2 including a plurality of photoelectric conversion elements 12 and a vertical signal electric charge transfer device (a vertical charge coupled device: VCCD) 24 transferring the signal electric charges generated by the photoelectric conversion elements 12, a horizontal signal electric charge transfer device (a horizontal charge coupled device: HCCD) 3 transferring the signal electric charges transferred by the VCCD 24 to a horizontal direction and an output amplifier 4.

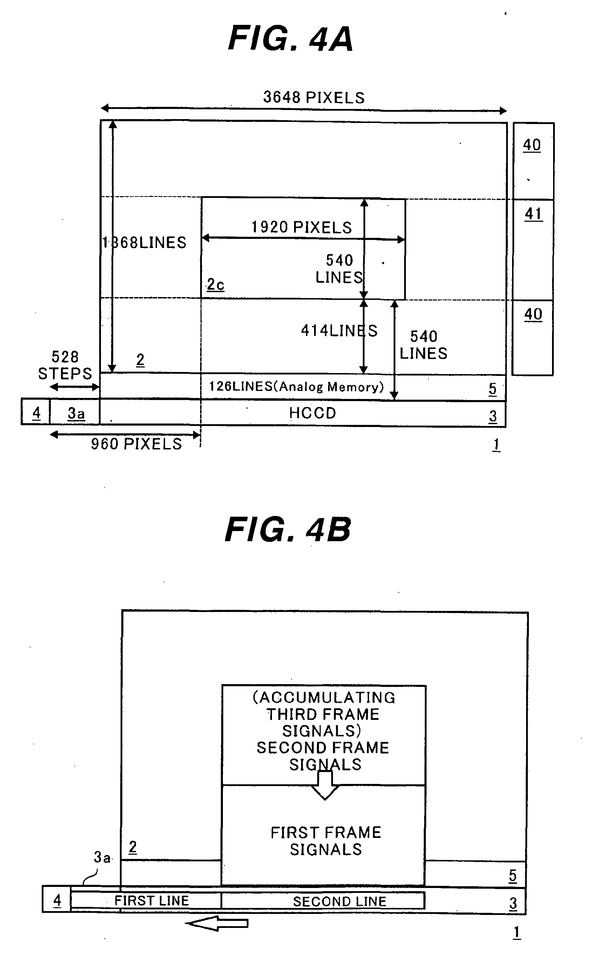

The first embodiment of the present invention can be characterized in that the solid-state imaging apparatus 1 further has an additional vertical transfer channel (analogue memory) 5 having at least more than 126 lines for forming a vertical transfer channel having the same number of transfer steps as the later-described number of cut-out lines (540 lines) of a cut-out region 2c (Fig. 4) or more than that between the cut-out region 2c and the HCCD 3.

Moreover, the solid-state imaging apparatus 1 has an additional horizontal transfer channel 3a having at least 528 transfer steps after the HCCD 3 for obtaining a transfer channel having the same number of transfer steps as the number of pixel in one cut-out pixel line or more than that between the output circuit 4 and the cut-out region 2c.

The light-receiving region 2 consists of the plurality of the photoelectric conversion elements 12 by configuring them in the so-called pixel interleaved arrangement or the honeycomb arrangement. The pixel interleaved arrangement used in this specification indicates an arrangement combining the first lattice of a two-dimensional tetragonal matrix and the second lattice of the two-dimensional matrix of which each lattice point is positioned at the center of the first lattice. For example, the photoelectric conversion elements 12 in the even numbered rows (lines) or columns and in the odd numbered rows (lines) or columns are shifted in the horizontal direction by about a half pitch of the photoelectric conversion elements 12, and the photoelectric conversion elements 12 in the even numbered lines (rows or columns) and in the odd numbered lines (rows or columns) are shifted in the vertical direction by about a half pitch of photoelectric conversion elements 12. Each row of the photoelectric conversion elements 12 includes the photoelectric conversion elements 12 in either one of the even numbered rows and in the odd numbered row. Similarly, each line of the photoelectric conversion elements 12 includes the photoelectric conversion elements 12 in either one of the even numbered lines and in the odd numbered line. The pixel interleaved arrangement is one of the arrangement styles for arranging a multiplicity of the photoelectric conversion elements in a matrix having a plurality of rows and lines.

The phrase "about a half' represents a pitch including an exact half pitch and also a pitch regarded as substantially equal to the half pitch from the performance and image quality although this pitch is different from the exact half pitch because of manufacture tolerances, rounding errors of pixel positions caused from design or manufacturing of a mask or the like.

Each one of the photoelectric conversion elements 12 composes one pixel and generates a signal electric charge in accordance with an incident light.

The vertical electric charge transferring device 24 that reads out the signal electric charges generated by the photoelectric conversion elements 12 and vertically transfers them are formed between columns of the photoelectric conversion elements 12 by vertically traversing between spaces of the photoelectric conversion elements 12. Transfer channels 14 are positioned in the zigzag spaces formed by the pixel interleaved arrangement, and the adjacent transfer channels 14 apart from each other via the photoelectric conversion elements 12 and come closer to each other via the channel stop region 13 (Fig. 2).

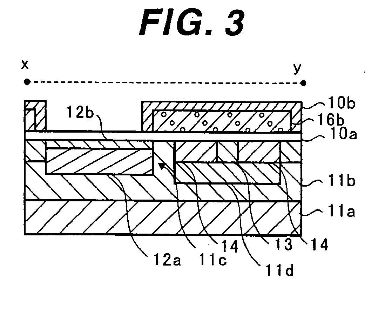

The vertical electric charge transfer device 24 consists of the vertical transfer channel 14 shown in Fig. 2 and transfer electrodes 16a and 16b (Fig. 2) which are formed over the vertical transfer channel 14 via an insulating film 10a (Fig. 3) and traversing between the photoelectric conversion elements 12 to the horizontal direction.

Fig. 2 is an enlarged plan view showing a part of the light-receiving region 2 of the solid-state imaging apparatus 1 according to the first embodiment of the present invention, and shows a condition wherein the insulating film on the semiconductor substrate is peeled to expose the photoelectric conversion elements 12 and the transfer electrodes 16.

Fig. 3 is an enlarged cross sectional view of the solid-state imaging apparatus 1 according to the first embodiment of the present invention. Moreover, this cross section shows the solid-state imaging apparatus cut across a single short-dashed line x-y in Fig. 2.

In the below-described explanation, in order to distinguish the degrees of impurity concentrations between impurity added regions having the same conductive type, it is transcribed as a p--type impurity added region, a p-type impurity added region and a p+-type impurity added region, or an n--type impurity added region, an n-type impurity added region and an n+-type impurity added region in sequence from the region that has relatively low in the impurity concentration. Except for a case that the p--type impurity added region 11 b is formed by the epitaxial growing method, it is preferable that all the impurity added regions are formed by ion-implantation and a thermal treatment after that.

The semiconductor substrate 11 has, for example, an n--type silicon substrate 11 a and the p--type impurity added region 11 b formed in a surface of the substrate 11. The p--type impurity added region 11 b is formed by the thermal treatment after the ion-implantation of p-type impurity on one surface of the n-type silicon substrate 11 a, or performing the epitaxial growth of silicon containing p-type impurity on one surface of the n-type silicon substrate 11 a.

Next, an n-type impurity added region (vertical transfer channels) 14 are formed in the p-type impurity added region 11 b having a width of, for example, 0.5µm corresponding to one row of the photoelectric conversion elements 12 formed in the later process. Each of the vertical transfer channels 14 has flat impurity concentration in a longitudinal (vertical) direction, and extends along with the corresponding row of the photoelectric conversion elements 12.

Next, a channel stop region 13 is formed adjoining to the vertical transfer channel 14 (on an opposite side of a reading gate channel region 11c). The channel stop region 13 is formed of, for example, p+-type impurity added region, trench isolation or local oxidation (LOCOS).

A part of the p-type impurity added region 11c is remained along with the right side of each photoelectric conversion element 12 (n-type impurity added region 12a) formed in the later process. Each p-type impurity added region 11c is used as a channel region 11c for the reading gate.

Next, an oxide film (or an ONO film) 15 is formed on the surface of the semiconductor substrate 11. The ONO film is composed by a lamination layer formed by laminating, for example, a silicon oxide film (thermal oxidation film) with thickness of about 20 to 70nm, a silicon nitride film with thickness of about 30 to 80nm and a silicon oxide film with thickness of about 10 to 50nm in this order. In Fig. 2, the oxide film 15 is represented with one layer for convenience of the explanation. Moreover, the above described oxide film 15 can also be formed with single oxide film (SiO2).

Next, an electrode forming process is executed. In this process, a transfer electrode (multilayered poly-silicon electrode) 16 is formed on the oxide film 15. The first polycrystalline Si layer 16a is laminated with thickness of 0.2µm to 3µm (for example, 1µm) on the oxide film 15 formed on the surface of the semiconductor substrate 1, and a photo-resist film is applied on a surface of the first polycrystalline Si layer 16a. Then, after patterning the photo-resist film to a predetermined pattern by photolithography (exposure and development), by using the patterned photo-resist film as a mask, the first polycrystalline layer 16a in an unmasked region (a region without the mask) is etched off by dry-etching (using chlorine-type gas) with strong anisotropy (high velocity of etching in vertical direction to the mask). By that, the first poly-silicon electrode 16a is formed.

Next, the Si surface is oxidized, and a SiO2 film (the second oxide film) is formed on the first poly-silicon electrode 16a with thickness of 300Å to 1000Å. Moreover, the second polycrystalline Si layer 16b is laminated on the second oxide film with thickness of 0.2µ to 3µm (for example, 1 µm) by using reducing CVD method or the like. Then, the patterning of the second polycrystalline Si layer 16b is performed by using the photolithography, and the second layer poly-silicon electrode 16b is formed. Moreover, at the cross section of this part, only the second layer poly-silicon electrode 16b is positioned over the vertical transfer channel 14. Also, two vertical transfer channels 14 are adjacent via the channel stop region 13.

Next, predetermined points of the p-type impurity added regions 11 b are converted to the n-type impurity added region 12a by ion implantation. Moreover, the n-type impurity added region 12a functions as an electric charge accumulation region. By converting the surface layer part of the n-type impurity added region 12a to the p+-type impurity added region 12b by ion implantation, a photoelectric conversion element 12 that is buried-type photo-diode is formed.

Next, an insulating film 10 is formed to cover the multilayer poly-silicon electrodes 16 and a front surface of the silicon substrate 11, and a light shielding film (not shown in the drawing) is formed by laminating alloy consisting of two or more than two types of metals such as tungsten, aluminum, chrome, titan, molybdenum and the like by PVD or CVD. This light shielding film covers each transfer electrode 16 or the like and prevents unnecessary photoelectric conversion in a region other than the photoelectric conversion element 12. The light shielding film has one opening over each of the photoelectric conversion element 12. Moreover, a passivation layer, a planarizing insulating layer, a color filter layer, the second planarizing film and micro lenses are formed on the light shielding film.

Fig. 4A is a plan view for explaining an image cutting out method in the solid state imaging apparatus 1 according to the first embodiment of the present invention.

As shown in Fig. 4A, the solid state imaging apparatus 1 according to the first embodiment has a light receiving region 2 with about 5 millions pixels of horizontal 3648 pixels by vertical 1368 lines. In the first embodiment, signal electric charges of horizontal 1920 pixels by vertical 540 lines are read out from the cut out region 2c in the light receiving region 2 for an HDTV motion picture. The cut-out region 2c is positioned approximately in the center of the light receiving region 2; therefore, the number of the vertical transfer steps in the VCCD 24 under the cut-out region 2c is 414 lines.

As described in the above, the additional transfer channel 5 with 126 or more than 126 lines is positioned between the light receiving region 2 and the HCCD3 to obtain the vertical transfer steps for one pixel line (1920 pixels) or more of the cut-out region 2c. Moreover, the additional horizontal transfer channel 3a with 528 steps or more is positioned for obtaining the horizontal transfer steps with one pixel line (1920 pixels) or more of the cut-out region 2c.

Moreover, in the first embodiment of the present invention, the light receiving region 2 with pixel interleaved arrangement is used. In the vertical transfer in the pixel interleaved arrangement, 960 pixels (transfer steps) which are half of the number of the horizontal pixels of 1920 pixels is necessary in the outputting direction from the cut-out region 2c because a half of the number of the pixels in the pixel line is transferred as one transfer step.

Fig. 4A also shows a power supply block of the VCCD 24. Power supply lines 41 for electrodes (gate electrodes) controlling transfer of signal electric charges from the photoelectric conversion elements 12 to the VCCD 24 in a cut-out region 2c in the drawing are formed electrically independent from power supply lines 40 in other region; therefore, only the signals included in the cut-out region 2c can be selectively transferred from the photoelectric conversion elements 12 to the VCCD 24. Moreover, the power supply block in this drawing can be applied to the later-described all embodiments of the present invention.

Fig. 4B is a plan view for explaining an image cutting out method in the solid state imaging apparatus 1 according to the first embodiment of the present invention.

First, signals electric charge for a first frame of image composed of 3648 pixels by 540 lines (hereinafter called "first frame signals") are selectively read out from the photoelectric conversion elements 12 in the center of the light receiving region 2 to the VCCD 24. This kind of selective read-out (selective transfer) can be easily realized by independently forming wirings of the gate electrodes of the VCCD 24. Thereafter, the first frame signals read out to the VCCD 24 are vertically transferred to a position just below the cut-out region 2c (a position shown in Fig. 4B).

Thereafter, signals electric charge for a second frame of image composed of 3648 pixels by 540 lines (hereinafter called "second frame signals") are selectively read out from the same photoelectric conversion elements 12 as the first frame signals to the VCCD 24. The first and the second frame signals are stored in a condition shown in Fig. 4B. That is, the first and the second frame signals are stored continuously in vertical adjoining positions in the VCCD 24.

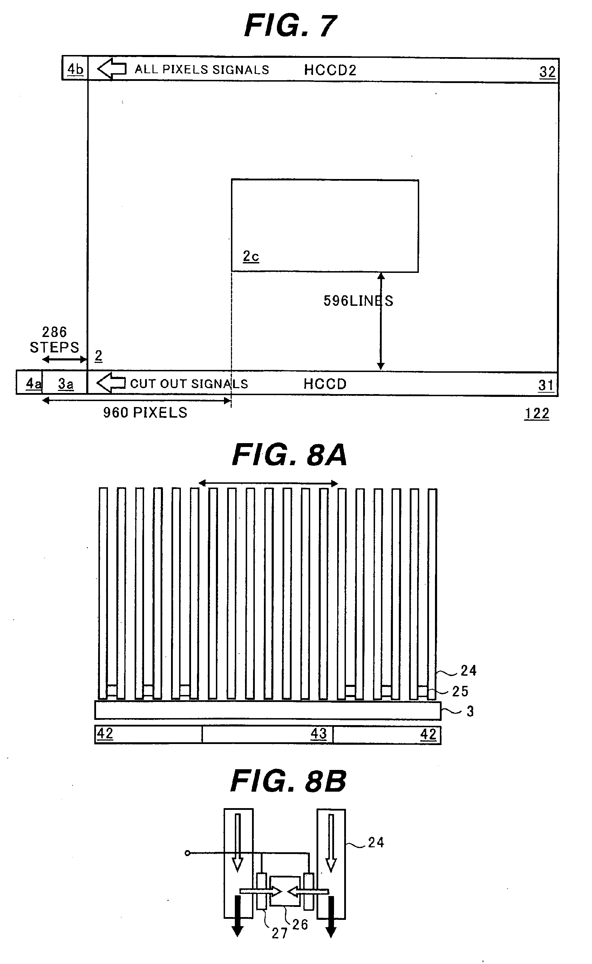

Next, first line signals of the first frame signals are transferred to the HCCD 3. In this embodiment, only the signals of pixels used for an HDTV motion picture (1920 pixels) in signals for one pixel line (3648 pixels) are transferred to the HCCD 3, and other signals (unnecessary signals on the left and the right side of the necessary signals) are drained from the later-described drain 25 such as the later-described v-drain 26 shown in Fig. 8.

When the first line signals of the first frame signals are transferred to a position just before the output circuit 4 in the HCCD 3 (a position shown in Fig. 4B), only the signals of pixels used for an HDTV motion picture (1920 pixels) in signals in a second line are transferred to the HCCD 3. By repeating those operations, an HDTV motion picture will be abele to be output without times loss.

The outputting signals are processed to be 1920Hx1080V images by the well-known honeycomb interpolation process. A data rate necessary for making the images a motion picture of 30fps is about 37 MHz (when the blanking period is 20%). At this date rate, the noise reduction process such as CDS, etc. can be easily performed, and one-line read-out (read-out by one HCCD) will be possible. In this embodiment, an HDTV motion picture to be reproduced will be twice zoomed-up comparing to a still picture when all the pixels are read out.

In the first embodiment of the present invention, although the solid state imaging apparatus having 5 millions pixels, it is preferable to select the number of pixels for a still picture to have the number of non-cut-out lines that is the same or approximately same as the number of the cut-out lines between the cut-out region 2c and the HCCD 3. By that, the additional vertical transfer channel 5 can be omitted.

For example, providing that an HDTV motion picture is cut out from the center of the light receiving region 2, the number of the vertical lines will be three times of the necessary 540 lines and more. If that is developed to 4:3 angle of still image, the vertical lines only for green will be 1620 lines and the number of horizontal pixels will be 2160; therefore, as a total of green, red and blue, the necessary pixels will be about 7 millions pixels (2160x1620=6,998,400). That is, the optimized number of pixels (wherein the additional vertical transfer channel 5 can be omitted) in the first embodiment will be 7 millions pixels and more. Even in this case, the additional horizontal transfer channel 3a is necessary and the number of its transfer steps is 360.

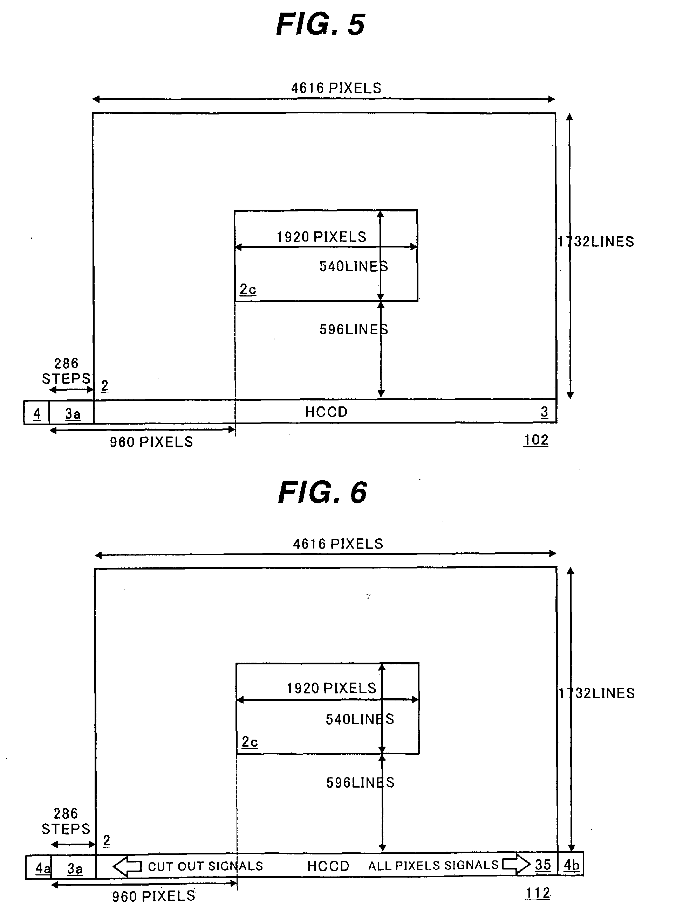

Fig. 5 is a plan view for explaining an image cutting out method in the solid state imaging apparatus 102 according to a second embodiment of the present invention.

As shown in Fig. 5, the solid state imaging apparatus 102 according to the second embodiment has a light receiving region 2 with about 8 millions pixels of horizontal 4616 pixels by vertical 1732 lines. In the second embodiment, signal electric charges of horizontal 1920 pixels by vertical 540 lines are read out from the cut out region 2c in the light receiving region 2 for an HDTV motion picture. The cut-out region 2c is positioned approximately in the center of the light receiving region 2; therefore, the number of the vertical transfer steps in the VCCD 24 under the cut-out region 2c is 596 lines. In the second embodiment, all the signals for one frame can be stored in the VCCD 24 under the cut-out region 2c; therefore, the additional vertical transfer channel 5 can be omitted.

Moreover, comparing to the first embodiment of the present invention, the sufficient number of the transfer steps of the additional horizontal transfer channel 3a for obtaining the horizontal transfer steps for more than one pixel line (1920 pixels) of the cut-out region 2c is 286 by increasing the number of the horizontal pixels.

Moreover, the structure and the transfer method other than that the additional vertical transfer channel 5 becomes unnecessary and the number of the steps of the additional horizontal channel 3a decreases are the same as in the first embodiment of the present invention, and their explanations will be omitted.

Fig. 6 is a schematic plan view showing a solid-state imaging apparatus 112 according to a first modified example of the second embodiment of the present invention.

In this first modification of the second embodiment of the present invention, the cut-out region 2c and the transfer scheme of the cut-out image is the same as those according to the second embodiment of the present invention. In the second embodiment of the present invention, since signals are transferred to the output circuit 4 via the additional horizontal transfer channel 3a when all the signals are read out simultaneously, it takes an extra time for the transfer steps of the additional horizontal transfer channel 3a, and the read-out time will be extended.

In the first modified example of this second embodiment of the present invention, when only the cut-out signals are read out, as same as the above-described second embodiment, the signals are horizontally transferred by the HCCD 3 to the left in the drawing and are output to the first output circuit 41 via the additional horizontal circuit 3a. In case of the all pixel signals, the transfer direction of the HCCD 3 is switched to the right for directly transferring the signals to the output circuit 4b. By that, the all pixel signals can be transferred without passing the additional horizontal transfer channel 3a, and the extra transfer time will be eliminated.

Fig. 7 is a schematic plan view showing a solid-state imaging apparatus 122 according to a second modified example of the second embodiment of the present invention.

In this second modified example, the cut-out region 2c and the transfer scheme of the cut-out image is the same as those according to the second embodiment of the present invention. In the second modified example of the second embodiment of the present invention, when only the cut-out signals are read out, as same as the above-described second embodiment, the signals are horizontally transferred by the first HCCD 31 to the left direction after vertically transferred by the VCCD 24 to the lower direction in the drawing to output to the first output circuit 4a via the additional horizontal transfer channel 3a. In case of the all pixel signals, all the signals are transferred to the left direction by the second HCCD 32 after vertically transferring to the upper direction in the drawing by the VCCD 24 to directly transfer to the second output circuit 4b. By that, the all pixel signals can be transferred without passing the additional horizontal transfer channel 3a, and the extra transfer time will be eliminated.

Fig. 8A and Fig. 8B are diagrams for explaining a VCCD drain 25 according to all the embodiments of the present invention.

The VCCD drain 25 transfers only the signal electric charges corresponding to the pixels included in the cut-out region 2c in a horizontal pixel line and deletes signal electric charges other than the signal charges in the cut-out region 2c. At least one VCCD drain 25 is arranged to every two VCCDs 24 at or near an output-side edge (HCCD 3 side) of the VCCD 24 where is not included in to the cut-out region 2c. Further, when the additional transfer channel 5 is equipped, the VCCD drain 25 may be equipped at or near an output-side edge of the additional vertical transfer channel 5.

When cut-out reading out is performed, a controlling electrode 27 is selectively turned on for opening the gate to prevent the signal electric charges read-out from non-cut-out region and transferred by the VCCD24 from being transferred to the HCCD 3, that is, to drain the unnecessary signals (signals of the non-cut-out region) from the VCCD drain 25 as shown with white arrows in the drawing. On the other hand, when the all pixel signals are read out, the control electrode 27 is turned off for closing the gate to allow all the signals to be transferred to the HCCD 3 (to prevent the signals from being drained from the VCCD drain 25) as shown with black arrows.

Moreover, it can certainly be prevented that the signal electric charges in the line other than the cut-out line are leaked from the VCCD 24 to the HCCD 3 by wiring the power supply line 43 of the block corresponding to the cut-out region 2c of the HCCD 3 electrically independent from the power supply line 42 of the block corresponding to the region other than the cut-out region (non-cut-out region).

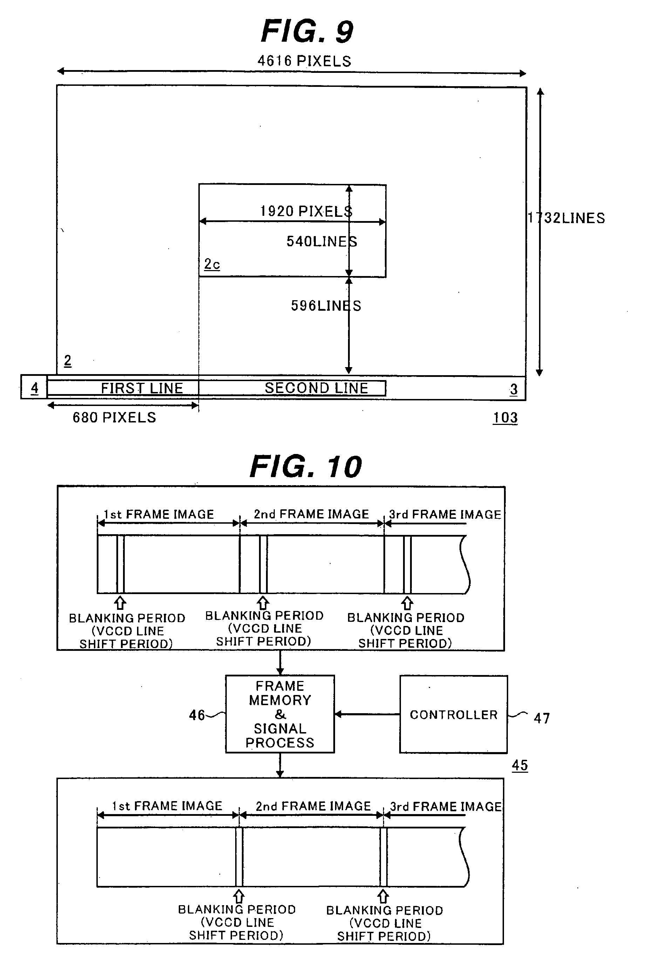

Fig. 9 is a plan view for explaining an image cutting out method in the solid state imaging apparatus 103 according to a third embodiment of the present invention.

As shown in Fig. 9, the solid state imaging apparatus 103 according to the third embodiment has the light receiving region 2 with about 8 millions pixels of horizontal 4616 pixels by vertical 1732 lines. In the third embodiment, the additional horizontal transfer channel 3a is omitted from the structure explained in the second embodiment.

In case of the solid state imaging apparatus 103 having 8 million pixels, the horizontal number of the transfer steps from the left side edge of the cut-out region 2c to the output circuit 4 is 680 steps. Since the horizontal number of the cut-out pixels is 920 pixels, G signals and RB (a set of R and B signals) are respectively 960 pixels. First, a first line including only G is transferred to the HCCD 3 and is transferred to the left in the HCCD 3. When a second line including RB is transferred to the HCCD 3, the end of the first line must be out of at least the HCCD 3 corresponding to the cut-out region 2c. Therefore, the remaining 280 pixels that is a product of subtraction of remaining 680 pixels in the HCCD 3 from all the 960 pixels must have been already output to the output circuit 4. The horizontal transfer operation of the HCCD 3 must be stopped during transferring signals from the VCCD 24 to the HCCD 3, this period is substantially a horizontal blanking period. Originally, the blanking period must exist between one frame and the next frame. In this third embodiment, one frame image is cut by the blanking period, that is, a blanking period cuts into an intermediate part of one frame of image. A blanking timing correction circuit 45 for resolving this nonconformity is shown in FIG. 10.

Fig. 10 is a block diagram for explaining a function of a blanking timing correction circuit 45 according to the third embodiment of the present invention.

The blanking timing correction circuit 45 corrects the frame signals cut by the blanking period output by the structure of the solid state imaging apparatus 103 according to the third embodiment.

As shown in the lower part of the drawing, the normal signals having the blanking period between two frames can be obtained by selectively reading out only the signal part at a predetermined frequency by the controller after writing the frame signals cut by the blanking period to the frame memory/signal processing circuit 4.

Moreover, although in the above-described third embodiment, all the additional horizontal transfer channels are omitted, just a part of the additional horizontal transfer channels may be omitted.

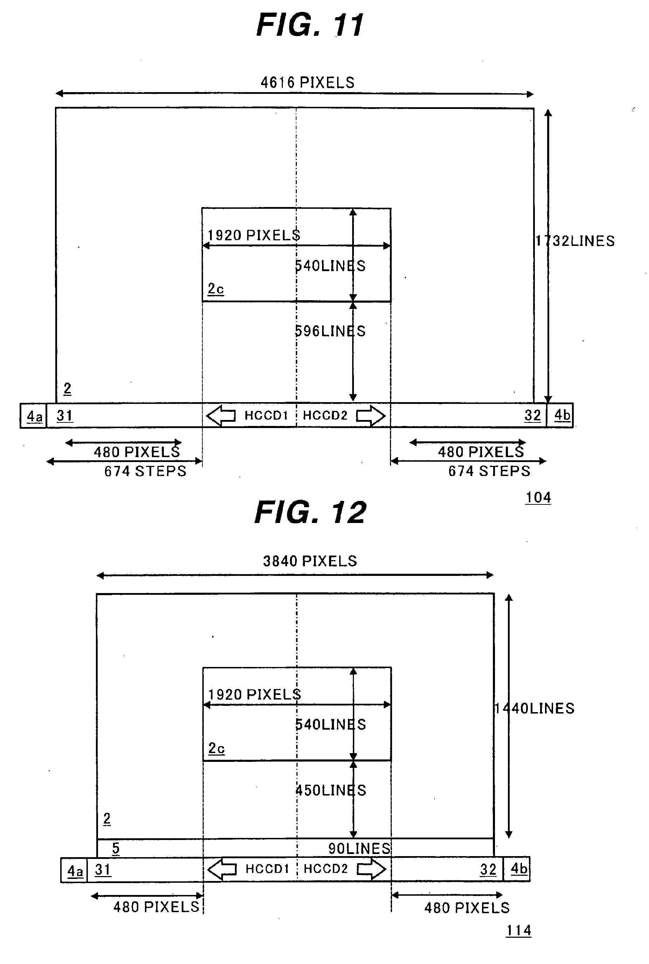

Fig. 11 is a plan view for explaining an image cutting out method in the solid state imaging apparatus 104 according to a fourth embodiment of the present invention.

As shown in Fig. 11, the solid state imaging apparatus 104 according to the fourth embodiment has a light receiving region 2 with about 8 millions pixels of horizontal 4616 pixels by vertical 1732 lines. In the fourth embodiment, signal electric charges of horizontal 1920 pixels by vertical 540 lines are read out from the cut out region 2c in the light receiving region 2 for an HDTV motion picture. The cut-out region 2c is positioned approximately in the center of the light receiving region 2; therefore, the number of the vertical transfer steps in the VCCD 24 under the cut-out region 2c is 596 lines. In the fourth embodiment, all the signals for one frame can be stored in the VCCD 24 under the cut-out region 2c; therefore, the additional vertical transfer steps can be omitted as same as the second embodiment.

Differences between the second embodiment and the fourth embodiment are that the light receiving region 2 is divided into right and left from the center as shown with a chain line in the drawing and that the signals are transferred to the right and left sides, in accordance with the regions where the signals are read out, respectively by the HCCD 31 and by the HCCD 32 to output from the output circuit 4a or the output circuit 4b after vertically transferred by the VCCD 24.

With the above-described structure, the transfer steps on the right and left side of the HCCD 3 of the part that is not horizontally cut out can be used as a line buffer; therefore, the additional horizontal transfer steps can be omitted, or the transfer steps can significantly decreased. In this fourth embodiment, since the solid state imaging apparatus 104 with 8 million pixels is used, the transfer steps which are not cut out in the HCCD 3 are 674 steps, and it is sufficient to transfer and store the signal with a necessary minimum 480 pixels.

Fig. 12 is a schematic plan view showing a solid-state imaging apparatus 114 according to a modified example of the fifth embodiment of the present invention.

In this example, the number of the horizontal pixels to be cut out is the same as the number of the horizontal pixels not to be cut out. In this case, it is not necessary to equip with the additional horizontal transfer step, and the structure has the minimum horizontal transfer steps. The difference from the fourth embodiment is that the additional vertical transfer channel 5 with 90 lines is equipped because the vertical transfer steps of the region not to be cut-out becomes insufficient for 90 steps. For example, when the length of the one transfer step is 3 µm, the increase in chip size by addition of this additional vertical transfer channel 5 is only 0.27 mm, and increase in chip size will not be a problem.

Fig. 13 is a plan view for explaining an image cutting out method in the solid state imaging apparatus 105 according to a fifth embodiment of the present invention.

As shown in Fig. 13, the solid state imaging apparatus 105 according to the fifth embodiment has a light receiving region 2 with about 5.5 millions pixels of horizontal 3840 pixels by vertical 1440 lines. Differences from the fourth embodiment are that the light receiving region 2 is divided into four sections: an upper left section, upper right section, lower right section and lower left section from the center as shown with a chain line in the drawing and that the signals in the lower left and lower right and in the upper left and upper right sections are transferred respectively to the lower direction and to the upper directions by VCCD 24 and are transferred to left and right directions respectively by the HCCDs 31-34 to be output from the output circuits 4a-4d.

With the above-described structure, the transfer steps in the right and left of the HCCD 3 of the part to be not horizontally cut out can be used as a line buffer; therefore, the additional horizontal transfer steps can be omitted, or the transfer steps can substantially decreased. In inverse proportion to the number of times to divide the region, a necessary time to read out the cut-out region gets short; therefore, the frame rate in the fifth embodiment becomes 4 times of that in the first embodiment.

According to the embodiments of the present invention, the power supply line for impressing transfer pulses to the transfer gates controlling the transfer of signal electric charges to the VCCD 24 from the photoelectric conversion elements corresponding to the pixel lines from which signal electric charges are partially read out are electrically isolated and controlled independently from the power supply lines for impressing transfer pulses to the transfer gates controlling the transfer of signal electric charges to the VCCD 24 from the photoelectric conversion elements corresponding to the pixel lines from which all signal electric charges are read out; therefore, the number of pixels read out to the VCCD 24 can be restrained to the minimum necessary number. Moreover, the signal electric charges of the necessary part of the pixel line are selected from all the signal electric charges of the plurality of photoelectric conversion elements 12 composing in one horizontal line to be transferred to the HCCD 3, and the drain structure can drain the unnecessary . (unselected) signal electric charges; therefore, the number of pixels transferred to the HCCD 3 can be restrained to the minimum necessary number. Only the signals of the necessary part can be selectively output.

Moreover, according to the embodiments of the present invention, the additional transfer channel is equipped according to the necessity in order to store the first frame signals composed of the selected multi-pixels and the following second frame signals in the VCCD 24 and the additional transfer channel at the same time; therefore, an empty transfer of the VCCD 24 will be eliminated to eliminate an unnecessary transfer time. Moreover, since the additional horizontal transfer channel having the transfer steps which can store the predetermined signal electric charges is equipped between the HCCD 3 and the output circuit 4, an empty transfer of the HCCD 3 will be eliminated to eliminate an unnecessary transfer time. Therefore, the necessary signals of the pixels can be output at the minimum data rate.

Moreover, in the embodiments of the present invention, since the partially output image signal can be enlarged to have the doubled number of pixels by the signal process (honeycomb signal process) by adopting the solid state imaging apparatus with the pixel interleaved arrangement, only a half number of the pixels of the number of the pixels to be actually reproduced as one frame may be necessary to be output, and the frame rate can be twice at the same data rate. Therefore, a high quality image can be obtained at the minimum number of the pixels.

Moreover, in the above-described embodiments, cutting-out of the HDTV motion picture has been explained; however, cut-out size is not limited only to the above embodiments, and it can be realized with an arbitral size. Moreover, cutting-out of the image is not limited only to the motion pictures, and it can be applied for still pictures. For example, it can be used as reading out of an electrically zoomed in image. In this case, continuous photographing speed can be remarkably higher.

Moreover, although in the embodiments of the present invention the CCD type solid state imaging apparatus has been explained, it is not limited only to the above embodiments. For example, the concept of the image cut-out of the present invention can be applied to CMOS type solid state imaging apparatus.

The present invention has been described in connection with the preferred embodiments. The invention is not limited only to the above embodiments. It is apparent that various modifications, improvements, combinations, and the like can be made by those skilled in the art.

## Claims

1. A solid state imaging apparatus that outputs an image of a frame composed of a first number of lines of pixels and a second number of columns of pixels, the apparatus comprising:
a semiconductor substrate demarcating a two-dimensional surface;
a multiplicity of photoelectric conversion elements arranged in a plurality of lines and columns in a light receiving region of the semiconductor substrate, each photoelectric conversion element composing the pixel and generating a signal electric charge in accordance with an incident light;
a vertical electric charge transfer device that is arranged vertically between the columns of the photoelectric conversion elements and transfers the signal electric charge generated by the photoelectric conversion elements;
a plurality of transfer gates each of which controls transfer of the signal electric charge to the vertical electric charge transfer device from the photoelectric conversion element;
a power supplying device that has a first power supply line for impressing a transfer pulse to the transfer gates corresponding to the photoelectric conversion elements in the first number of lines of pixels and a second power supply line for impressing a transfer pulse to the transfer gates corresponding to the photoelectric conversion elements in other lines of pixels, wherein the first and the second power supply lines are electrically independent from each other and the power supplying device can control the transfer gates to read out the signal electrical charges only from the photoelectric conversion elements in the first number of lines of pixels;
a drain that that drains the signal electric charges corresponding to the photoelectric conversion elements other than the signal electric charges corresponding to the photoelectric conversion elements in the second number of columns of pixels from the read out signal electrical charges of the photoelectric conversion elements in the first number of lines of pixels;
a horizontal electric charge transfer device that horizontally transfers the signal electric charges transferred by the vertical electric charge transfer device; and
an output circuit that outputs the signal electric charges transferred by the horizontal electric charge transfer device.

2. The solid state imaging apparatus according to claim 1, further comprising an additional vertical transfer channel having transfer steps by which continuous two of the frames of image can be stored simultaneously by cooperating with the vertical electric charge transfer device.

3. The solid state imaging apparatus according to claim 1, further comprising an additional horizontal transfer channel having transfer steps, by which at least one line of the signal electric charges corresponding to the photoelectric conversion elements in the second number of columns of pixels can be stored by cooperating with the horizontal electric charge transfer device, between the horizontal electric charge transfer device and the output circuit.

4. The solid state imaging apparatus according to claim 2, further comprising an additional horizontal transfer channel having transfer steps, by which at least one line of the signal electric charges corresponding to the photoelectric conversion elements in the second number of columns of pixels can be stored by cooperating with the horizontal electric charge transfer device, between the horizontal electric charge transfer device and the output circuit.

5. The solid state imaging apparatus according to claim 1, wherein the multiplicity of photo electric conversion elements are positioned on lattice points of a first lattice of a tetragonal matrix and of a second lattice of which each lattice point is positioned at a center of the first lattice in a light receiving region of the semiconductor substrate.
